# EUROPEAN PATENT APPLICATION

(11) **EP 2 400 447 A1**
(43) Date of publication of application: **28.12.2011**
(21) Application number: 11170907.7
(22) Date of filing: 22.06.2011
(51) Int. Cl.: G06Q 10/00

(54) **System and method for electronically managing appointments**

(30) Priority: 23.06.2010 US 357807 P
(71) Applicant: Mamoth-Group, Pointe-Claire QC H9R 5N3 (CA)
(72) Inventor: Nykamp, Eric, Pointe-Claire, Québec H9R 5S1 (CA); Tortorici, Pietro, Montréal, Québec H1E 1V8 (CA)
(74) Representative: Wittmann, Günther

(57) **Abstract**

The present relates to a method and system (100) for electronically confirming appointments. The method and system access by a coordination module (160) an appointment database (130) and assign by the coordination module an appointment identifier to an appointment to be confirmed. Then, the coordination module generates a verification message comprising appointment information and the appointment identifier. The verification message is electronically sent by a communication module (170) to at least one electronic address of a corresponding client. Then, the communication module receives a response message comprising the appointment identifier from the client. The coordination module treats the response message, and updates the appointment database in accordance with the response message.

## Description

The present relates to a system and a method for electronically confirming and/or managing appointments, and more particularly, for confirming and/or managing appointments of clients for one or several service providers through electronic terminals.

### BACKGROUND

Service companies thrive with appointments. The larger the service company, the greater number of appointments has to be managed. Furthermore, real-time confirmation of appointments is an important aspect of client satisfaction.

Typically, a client makes an appointment with a service company. Then, a couple of days before the appointment, a phone call is made to the client to remind and confirm the upcoming appointment. At that point, the client confirms the appointment, cancels the appointment, or reschedules the appointment.

However, to make these calls, service companies have to hire one or several persons to perform this task. Thus the cost for managing appointments may be substantial. In a difficult economy where profit margins are tighter and client satisfaction is even more important, such methods of managing appointments are not efficient.

Also, many clients do not appreciate being bothered during their daily activities with a call from the service provider to confirm their appointment. Many find such calls disruptive, and prefer to simply not answer them. In such situations, as the appointment could not be confirmed, the service provider cannot efficiently manage the appointments, as the appointment for the client that has not confirmed has to be honoured, without confirmation that the client will come. In the event that the client does not come to the appointment, there is further a loss of profit for the service company.

There is thus a need for a system and a method for providing electronic confirmation of appointments for service providers.

### BRIEF DESCRIPTION OF THE DRAWINGS

In the appended drawings:

Figure 1 is schematic representation of a system for electronically confirming appointments, in communication with a plurality of service providers appointment databases and a plurality of clients;

Figure 2 is a flow diagram of a method for electronically confirming appointments, in communication with at least one terminal of a client; and

Figure 3 is a flow diagram of a method for electronically confirming appointments, and more particularly for electronically re-scheduling an appointment.

### DETAILED DESCRIPTION

The present generally relates to electronic confirmation and/or managing of appointments, and more particularly to a system and method for electronically confirming appointments. For doing so, an appointment identifier is assigned to an appointment to be confirmed. The appointment identifier is used to identify the appointment to be confirmed in a verification message sent to at least one electronic address of a client corresponding to the appointment. The appointment identifier is also included in a response message.

More particularly, the present system for electronically confirming appointments comprises a communication module and a coordination module. The communication module is adapted for electronically sending a verification message to at least one electronic address of a client, and for receiving a response message from the client. The verification message and response message both comprise the appointment identifier. The coordination module is adapted for accessing an appointment database. The coordination module is further adapted for assigning appointment identifiers to appointments, and for generating the verification message. The coordination module is further adapted for treating the received response message, and for updating the appointment database accordingly.

In accordance with another aspect, the present relates to a method for electronically confirming appointments. The method comprises accessing by a coordination module an appointment database. Then, the method assigns by the coordination module an appointment identifier to an appointment to be confirmed. The coordination module generates a verification message comprising appointment information and the appointment identifier, and electronically sends the verification message to at least one electronic address of a corresponding client. Then, the communication module receives a response message comprising the appointment identifier from the client. The coordination module treats the response message, and updates the appointment database in accordance with the response message.

Confirming large numbers of appointments is a cumbersome task. For doing so, some companies hire telephonists who will contact each client on the phone to confirm their appointment. Although this approach offers a contact between the company and the client, it also has several drawbacks. First, calling each client for confirming his or her appointment is an expensive approach. Secondly, some appointments cannot be confirmed because the client cannot be reached by phone. Thirdly, not every client appreciates to receive a phone call at an impromptu moment of their busy life, to confirm an appointment.

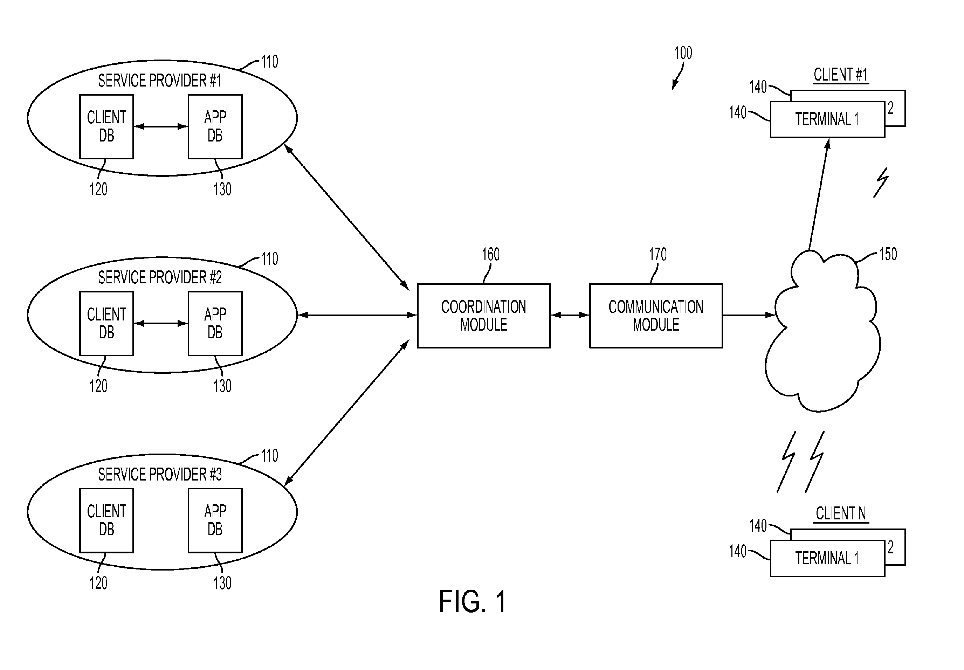

The present system and method provide an efficient and electronic way to confirm appointments. Reference is now made to Figure 1, which is schematic representation of a system 100 for electronically confirming appointments, in communication with one or a plurality of service providers' appointment databases and a plurality of clients. For doing so, the system 100 is in electronic communication with one or several service providers 110. Each service provider 110 may correspond to a company, an entity providing services, or any other type of entity that could benefit from the present system. The terminology 'service provider' should thus not be construed in such a manner as to limit it to providers of services, but to any entity that must confirm appointments with clients.

Typically, each of the service provider 110 has a client database 120 and an appointment database 130. The client database 120 stores information on the clients of the service providers. The information may consist of one or several of the following: a client identifier, a name, an address, a home phone number, a phone number at work, a cell phone number, an e-mail address, an identification recipients of services for that client, etc. The client identifier may be a separate identifier, or may be based on any of the other information for the client. The appointment database 130 in turn stores the appointment information for that particular service provider. The appointment database 130 may comprise one or several of the following information: a date, a time, a client identifier or any other information stored in the client database to identify the client. The client database 120 and the appointment database 130 may be in direct electronic communication as shown for service providers 1 and 2, or separate entities not in direct electronic communication as shown for service provider 3. The client database 120 and the appointment database 130 may consist of 'off the shelf' databases, or proprietary databases, or a combination thereof.

The present system 100 is also in electronic communication with a plurality of terminals 140. The system 100 may communication with the terminals 140 through a network 150, which is depicted on Figure 1 as a cloud for simplicity purposes. The network 150 may comprise one or several of the following: a mobile phone network, an internet network, or any other type of network which provides electronic communication between the present system 100 and the terminals 140. Each client may have one or several terminals on which electronic communications may be exchanged. Each terminal 140 may comprise one of the following: a mobile phone, a computer, a Personal Digital Assistant, an e-mail account, an SMS account, a BlackBerry™ messenger account, or any other type of terminal/account suited for exchanging electronic communications. Although Figure 1 depicts that each client has two terminals 140, the present is not limited to such an implementation. The present system is adapted for confirming appointments with clients having one or several terminals 140.

The present system 100 comprises a coordination module 160 and a communication module 170. The coordination module is in electronic communication either directly or by means of a network with the service providers 110, and directly with the communication module. In a typical implementation of the present system, the coordination module 160 and the communication module 170 are co-located, but the present system 100 is not limited to such an implementation. For example, the coordination module 160 could alternately be co-located at one the service providers 110. In turn, the communication module 170 is in electronic communication with the terminals 140 by means of the network 150.

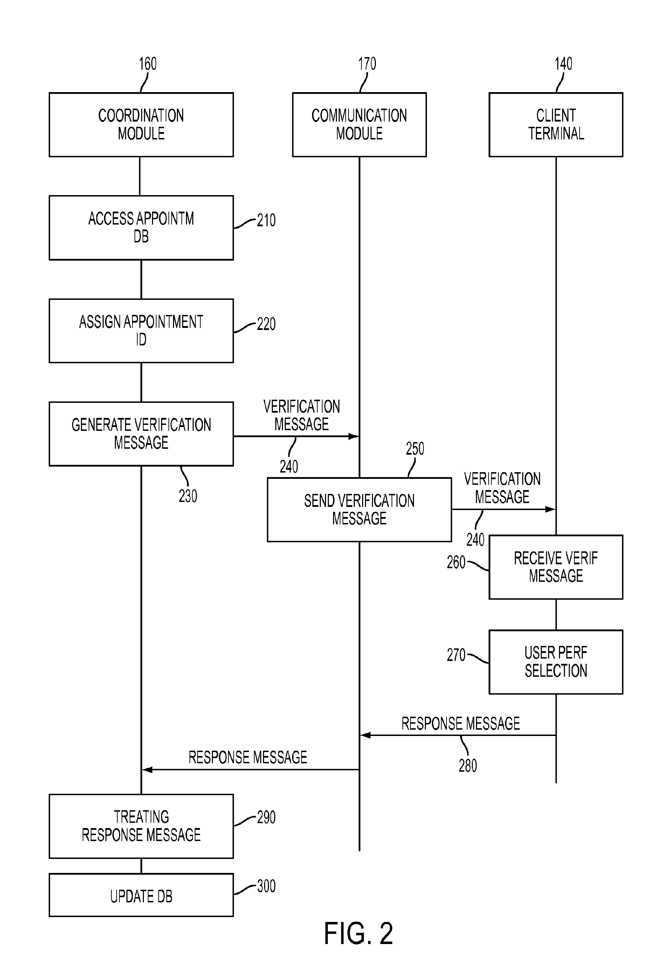

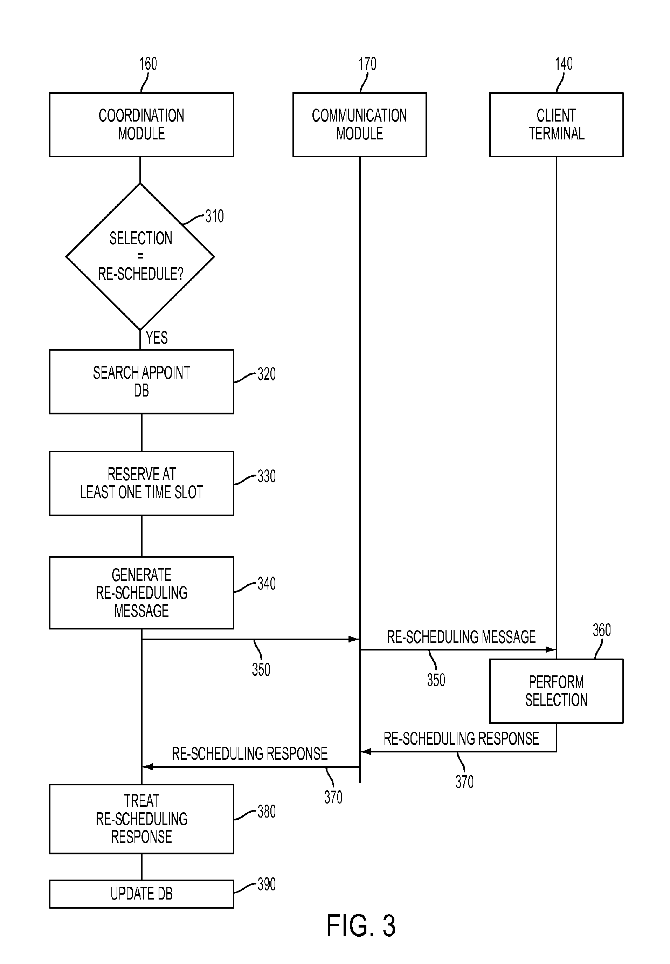

Reference is now concurrently made to Figures 1, 2 and 3, where Figure 2 is a flow diagram of a method for electronically confirming appointments, in communication with at least one terminal of a client, and Figure 3 is a flow diagram of a method for electronically confirming appointments, and more particularly for electronically re-scheduling an appointment. The coordination module 160 starts by electronically accessing 210 one or several appointment databases 130. Upon successful access to one of the several appointment databases 130, the coordination module 160 assigns 220 a different appointment identifier to each of the appointments therein to be confirmed. The appointment identifier may consist of any or the following: a series of digits, a combination of letters and digits, digits representing the corresponding service provider combined to a date and client identifier, or any suitable combination of information.

The coordination module 160 may first identify which of the appointments need to be confirmed by applying one or several rules, such as for example: appointments upcoming in a predetermined time frame, appointments not already confirmed, appointments of the next day, etc. After having assigned different appointment identifiers to each of the appointments to be confirmed, the coordination module 160 generates 230 a corresponding verification message 240 comprising the appointment identifier, information on the corresponding service provider 110, date and time of the appointment to be confirmed, etc. The verification message 240 is sent to the communication module 170, which in turn sends 250 the verification message 240 to one or several client terminal(s) 140 associated with the client related to the appointment. Addresses for each of the client's terminal(s) may be included in the verification message 240 provided by the coordination module 160. The client terminal(s) electronic address(es) may be extracted by the coordination module 160 from the corresponding client database 120. The communication module 140 receive(s) the verification message 260 and forwards the verification message 240 to the client's terminal(s) based on the received electronic address(es). The communication module 170 is thus adapted for electronically sending the verification message 250 over the network 150 by means of at least one of the following: e-mail, Short Message Service (SMS), VOIP, or any other electronic communication means. For doing so, the communication module may comprise one or several of the following: an e-mail generator, an SMS generator, a BlackBerry^{™} message generator, or any other type of electronic message generator.

When a user reads the verification message displayed on one of his/her client terminal(s) 140, the user may perform 270 a selection. For example, the verification message 240 may comprise one or several of the following options: appointment information, appointment confirmed, appointment cancelled, appointment to be re-scheduled, etc. The user may select one of the options by clicking on the text corresponding to the selected option. For each of the options in the verification message 240, the client terminal 140 automatically generates a corresponding response message 280. The response message 280 comprises an electronic address for the communication module 170, the appointment identifier and the option selected.

The response message 280 is received by the communication module 170, and sent to the coordination module 160 for treatment. The coordination module 160 treats 290 the response message, and updates 300 the appointment in the appointment database 130 corresponding to the received appointment identifier. More particularly, the coordination module 160 accesses the received response message to extract the appointment identifier, and the user selection. Based on the received appointment identifier, the coordination module 160 determines the corresponding service provider, and appointment to be updated with the received user selection.

If the selection is that the appointment is confirmed, the coordination module 160 updates the corresponding appointment with the information that the appointment has been confirmed. If the selection is that the appointment is cancelled, the coordination module 160 updates the corresponding appointment with the information that the appointment has been cancelled, and the corresponding appointment is made available for scheduling.

If the received selection is to re-schedule 310, the coordination module 160 searches 320 in the appointment database 130 of the corresponding service provider to identify non-allocated time slot(s) to provide as possible available appointment(s) proposed for re-scheduling alternative(s). For example, the coordination module 160 may identify one or time slot(s) available, i.e. not scheduled, and reserve 330 the one or several identified appointment(s). The reservation may be performed for a predetermined minimum and/or maximum number of available appointments, and for a predetermined period of time after which the reserved appointment(s) is/are automatically released and made available.

The coordination module 160 then, as previously described, assigns a different appointment identifier to each of the proposed re-scheduling alternative(s). Then, the coordination module generates 340 a re-scheduling message 350 in a similar manner as the verification message 240. The re-scheduling message 350 may comprise for example: the one or several proposed re-scheduling alternative(s), a selection for requesting other alternative(s), a selection for cancelling the appointment, etc.

The communication module 170 sends the re-scheduling message to the at least one electronic address of the client terminal(s) 140. Upon reading of the re-scheduling message 350 on one of his/her client terminal(s) 140, the user may perform 360 a selection by clicking on the selected option. Clicking of the selected option automatically generates a corresponding re-scheduling response 370. The communication module 170 receives the re-scheduling response message 370 from one of the electronic address of the client, and forwards the received re-scheduling response message 370 to the coordination module 160.

The coordination module 160 treats 380 the re-scheduling response message as previously described for the response message 280 and updates 390 the corresponding appointment database 130 accordingly. More particularly, the coordination module 160 may update the appointment database by confirming the appointment corresponding to the received re-scheduling response 370.

The coordination module 160 may consist for example of a dedicated hardware, or software, or be implemented by a combination of hardware and software.

The foregoing and other features of the present system and method will become more apparent upon reading of the following non-restrictive description of examples of implementation thereof, given by way of illustration only with reference to the accompanying drawings.

Although the present system and method have been described in the foregoing description by way of illustrative embodiments thereof, these embodiments can be modified at will, within the scope of the appended claims without departing from the scope, spirit and nature of the subject invention.

## Claims

1. A system for electronically confirming appointments, the system comprising:
a communication module for electronically sending a verification message to at least one electronic address of a client and for receiving a response message from the client, the verification message and response message comprising an appointment identifier; and
a coordination module for accessing an appointment database, for assigning appointment identifiers to appointments, for generating the verification message, for treating the response message and for updating the appointment database accordingly.

2. The system of claim 1, wherein the communication module is adapted for electronically sending the verification message by means of at least one of the following: e-mail, Short Message Service (SMS), VOIP.

3. The system of claim 1, wherein the response message comprises a selection of one of the following made by the client: appointment confirmed, appointment cancelled or appointment to be re-scheduled.

4. The system of claim 3, wherein the coordination module further updates the appointment database with the selection.

5. The system of claim 3, wherein upon receipt of the response message comprising the selection to be re-scheduled:
the coordination module generates a re-scheduling message comprising at least one proposed re-scheduling alternative, the re-scheduling message comprising another appointment identifier;
the communication module sends the re-scheduling message to the at least one electronic address of the client;
the communication module receives a re-scheduling response message from one of the at least one electronic address of the client;
the coordination module treats the re-scheduling response message and updates the appointment database accordingly.

6. The system of claim 3, wherein the coordination module further:
searches the appointment database for identifying at least one non-allocated time slot in the appointment database, and reserves the at least one non-allocated time slot by inputting the another appointment identifier.

7. The system of claim 6, wherein the coordination module reserves the at least one non-allocated time slot for a predetermined period of time.

8. The system of claim 7, wherein the coordination module treats the re-scheduling response message and updates the appointment database by confirming the appointment corresponding to the received re-scheduling response.

9. A method for electronically confirming appointments, the method comprising:
accessing by a coordination module an appointment database;
assigning by the coordination module an appointment identifier to an appointment to be confirmed;
generating by the coordination module a verification message, the verification message comprising appointment information and the appointment identifier;
electronically sending by a communication module the verification message to at least one electronic address of a corresponding client;
receiving by the communication module a response message from the client, the response message comprising the appointment identifier;
treating by the coordination module the response message; and
updating by the coordination module the appointment database in accordance with the response message.

10. The method of claim 9, wherein the communication module is adapted for electronically sending the verification message by means of at least one of the following: e-mail, Short Message Service (SMS), VOIP.

11. The method of claim 9, wherein the response message comprises a selection of one of the following made by the client: appointment confirmed, appointment cancelled or appointment to be re-scheduled.

12. The method of claim 11, wherein the coordination module further updates the appointment database with the selection.

13. The method of claim 11, wherein upon receipt of the response message comprising the selection to be re-scheduled:
the coordination module generates a re-scheduling message comprising at least one proposed re-scheduling alternative, the re-scheduling message comprising another appointment identifier;
the communication module sends the re-scheduling message to the at least one electronic address of the client;
the communication module receives a re-scheduling response message from one of the at least one electronic address of the client;
the coordination module treats the re-scheduling response message and updates the appointment database accordingly.

14. The method of claim 11, wherein the coordination module further:
searches the appointment database for identifying at least one non-allocated time slot in the appointment database, and reserves the at least one non-allocated time slot by inputting the another appointment identifier.

15. The method of claim 14, wherein the coordination module reserves the at least one non-allocated time slot for a predetermined period of time, and/or wherein the coordination module treats the re-scheduling response message and updates the appointment database by confirming the appointment corresponding to the received re-scheduling response.
